# EUROPEAN PATENT SPECIFICATION

(11) **EP 3 722 696 B1**
(45) Date of publication and mention of the grant of the patent: **10.04.2024**
(21) Application number: 20159972.7
(22) Date of filing: 28.02.2020
(51) Int. Cl.: F24H 3/04, F24H 9/18, H05B 3/16, H05B 3/26, H05B 3/56, F02M 31/13, H05B 3/32, F24H 9/1863

(54) **HOLDER FOR INSULATORS, INSULATOR HOLDER OF AN AIR HEATER, AIR HEATER AND MACHINE COMPRISING THE SAME**
HALTER FÜR ISOLATOREN, ISOLATORHALTER EINES LUFTERHITZERS, LUFTERHITZER UND MASCHINE DAMIT
SUPPORT POUR ISOLATEURS, SUPPORT D'ISOLATEUR D'UN RÉCHAUFFEUR D'AIR, RÉCHAUFFEUR D'AIR ET MACHINE LE COMPRENANT

(30) Priority: 12.04.2019 EP 19169098
(43) Date of publication of application: 14.10.2020
(73) Proprietor: Hidria d.o.o., 5281 Spodnja Idrija (SI)
(72) Inventor: GABERSCEK, Matija, 5220 TOLMIN (SI); ZAGAR, Uros, 5220 TOLMIN (SI)
(74) Representative: BARRE LAFORGUE

(56) References cited:
- EP-A1- 1 830 060
- US-A- 6 040 557
- US-A1- 2019 032 608

## Description

The invention relates to a holder for insulators, to an insulator holder of an electric air heater comprising said holder for insulators, to an electric air heater comprising at least one such insulator holder and to be placed in an engine compartment of a diesel machine, and to a machine -notably a diesel machine-equipped with at least one said electric air heater.

An electric air heater generally comprises:
- a housing designed to accommodate a debit of air to be heated, to heat said debit of air and to deliver a debit of heated air from the debit of air to be heated,
- at least two serpentine shaped resistor ribbons,
- two insulators, each insulator being provided with at least two sets (rows) of aligned recesses, each set of aligned recesses being adapted to cooperate with bents of one serpentine shaped resistor ribbon extending on one side of said at least one serpentine shaped resistor ribbon,
- two holders, mounted opposite to each other in the housing, each of the holders accommodating one insulator for the two serpentine shaped resistor ribbons. Each holder has a bottom wall and two lateral walls extending from the bottom wall so as to define a globally U-shaped transversal section of the holder, each lateral wall being provided with a longitudinal folding adapted to maintain the insulator in the holder.

An electric air heater also comprises one leaf spring extending between the bottom wall of the holder and a main face of the insulator and cooperating with the holder by urging said insulator away from the bottom wall.

For example, US6152117 describes an air heater for the intake manifold of an internal combustion engine. The air heater includes a heater assembly coupled to housing for integration and connection to an air intake. The heater assembly includes a first holder and a second holder, each one of the first and second holder accommodating one ceramic insulator. One ceramic insulator cooperates with bents extending on one side of a first serpentine shaped resistor ribbon and with bents extending on one side of a second serpentine shaped resistor ribbon. The first and the second ribbons extend transversally in the housing to be in contact with a debit of air to be heated through the housing. Both ceramic insulators present a first set of aligned recesses and a second set of aligned recesses, said first and second set extending in directions parallel to each other. The first set of aligned recesses cooperates with bents defining one side of the first ribbon and the second set of aligned recesses cooperates with bents defining one side of the second ribbon, said first and second ribbons being separated by a web. The first row of aligned recesses accommodates, positions, and retains laterally the first ribbon according to the insulator, and the second row of aligned recesses accommodates, positions, and retains laterally the second ribbon according to the insulator. Said web separates and electrically insulates first ribbon from second ribbon. A leaf spring is disposed in each of the first and the second holders so as to urge elastically the insulator away from the bottom wall of the first and against the second holders and so as opposite compressive stresses are applied against the opposite sides of the two ribbons.

The insulators of the heater of US6152117 display some drawbacks. Leaf springs placed in opposite holders and in opposition to each other do not allow maintaining elastically the two ribbons independently of one another. As a consequence, one of the two ribbons is not effectively maintained longitudinally in compression in comparison to the other ribbon. The folds of the ribbon less efficiently maintained are likely to move in the cells of the insulators, especially under the effect of engine vibration and/or air movement. This results in preferential wear of these ribbons and an increased risk of loss of heating efficiency. The heater of US6152117 is not designed to withstand harsh vibration conditions.

US6040557, EP1830060 and US2019/032608 describe air heaters comprising a housing, two serpentine shaped resistor ribbons, four insulators, each insulator accommodating one lateral end of one serpentine shaped resistor ribbon, and two pairs of holders, the holders of one pair of holders being mounted opposite to each other in the housing, each one of the holders accommodating one insulator cooperating with one lateral end of one serpentine shaped resistor ribbon.

The invention aims to overcome these disadvantages.

The invention aims to provide with a holder for insulators, with an insulator holder of an electric air heater comprising said holder, with an air heater to be placed in an engine compartment of a diesel machine, and with a machine -notably a diesel machine- with increased resistance to vibration.

The invention aims to provide with a holder for insulators and with an insulator holder for an electric air heater which are simple to manufacture, and which can be easily mounted in an air heating device.

The invention aims to provide with a holder for insulators and with an insulator holder for an electric air heater enabling the fixation of air heating elements on the inner sides of the housing.

The invention aims to provide with an electric air heater which can be assembled from a low number of components, and is then simple to manufacture.

The invention aims to provide with a holder for insulators, with an insulator holder for an electric air heater and with an air heater for an engine of a diesel machine presenting a reduced cost.

The invention aims to provide with a holder for insulators and with an insulator holder for an electric air heater that allow to limit the time for assembly the insulator in the air heating device.

The invention aims to provide with a holder for insulators and with an insulator holder for an electric air heater which can be firmly mounted in the housing of an air heater.

The invention aims to provide with a holder for insulators and with an insulator holder for an electric air heater which can be mounted simply in the housing of the air heater with screw(s), rivet(s), glue or tight tolerance assembly means.

The invention aims to provide with a holder for insulators and with an insulator holder for an electric air heater that can be fabricated accurately, without summing different tolerance.

The invention aims to provide with a holder for insulators and with an insulator holder for an electric air heater, said holder for insulators and said insulator holder being able to be adjusted precisely and securely in the housing of an air heater.

The invention also aims to provide with an electric air heater which does not allow air leakage.

The invention aims to provide with a holder for insulators, with an insulator holder of an electric air heater comprising said holder, with an air heater to be placed in an engine compartment of a diesel machine, and to a machine -notably a diesel machine- which is cheap and robust and withstanding harsh vibration profile.

Therefore, the invention relates to a holder (a holder for insulators) for accommodating at least two solid pieces (insulators) of at least one insulating material, said at least two solid pieces being adapted for maintaining serpentine shaped air heating elements of an air heater in a debit of air flowing through the air heater, and for maintaining said serpentine shaped air heating elements at distance from each other in the air heater;
said holder presenting a bottom and two lateral walls extending from longitudinal sides of the bottom in two planes parallel to each other and orthogonal to the plane of the bottom, and defining a U-shaped transversal section of the holder,
characterized in that said holder is made of one unique piece and presents at least one partition extending between the lateral walls, from the bottom in a plane parallel to the planes of the lateral walls and delimiting with the bottom and the lateral walls, at least two compartments of the holder, each compartment being designed to accommodate and secure one of said solid pieces of insulating material.

In the text, the terms "longitudinal", "longitudinally" design the direction parallel to the lateral walls and also parallel to the plane of the bottom of the holder. The terms "transverse", "transversal" design the direction orthogonal to the lateral walls and also parallel to the bottom of the holder.

The invention relates to a holder made in one piece for accommodating at least two insulators. The holder according to the invention is made of one (unique) piece. The holder according to the invention is monolithic. It consists of a single piece. It consists of a single cut and folded piece of a suitable material. The material forming the holder is so chosen to be a suitable material withstanding high temperatures. The holder according to the invention is one (unique) piece made of a material chosen in the group of metallic materials and polymer materials.

The holder according to the invention is made of one (unique) piece and is suitable to accommodate a plurality of solid pieces (insulators) of insulating material, each solid piece (insulator) of the plurality of solid pieces accommodated in the compartments of the holder being separated of the other solid piece(s) accommodated in the holder by said at least one partition. Particularly, each of solid piece of the plurality of solid pieces accommodated in the compartments of the holder are not in contact with the other solid piece(s) accommodated in the holder, at least one partition being interposed between two adjacent solid pieces. Said at least one partition is positioned between -notably parallel to- the two lateral walls. The solid pieces accommodated in the holder are juxtaposed parallel to each other and separated from each other by at least one longitudinal partition. The solid pieces accommodated in the holder present elongation axes which are distinct, parallel to each other and parallel to the partition(s). According to one embodiment of the invention, said at least one partition is a continuous partition. However, nothing prevents the partition from being discontinuous longitudinally.

The holder for insulators according to the invention comprises at least one partition separating at least two compartments of the holder, at least one -notably each- compartment(s) being adapted to receive at least one solid piece of an insulating material, said at least one solid piece forming a unique row of aligned recesses in a unique compartment and being used to hold one side of one (unique) serpentine shaped heating element. The unique row of aligned recesses of the solid piece of insulating material extends along an elongation axe parallel to the elongation axe of the solid piece of insulating material.

In certain embodiments, at least one -notably each- of the serpentine shaped air heating elements is(are) in the form of (a) heating ribbon(s). Each of the serpentine shaped air heating elements (ribbon) is(are) folded to form a plurality of substantially linear portions of the air heating element, two consecutive linear portions being separated by bent portions (or turns, or folds) extending alternately on one side of the folded serpentine shaped air heating element and alternately on the other side, opposite to the one side, of the folded serpentine shaped air heating element.

In this way, each solid piece (insulator) cooperates with a single serpentine shaped air heating elements (ribbon) so that this serpentine shaped air heating elements (ribbon) is efficiently maintained by two solid pieces placed in opposition on both sides of the serpentine shaped air heating element (ribbon), each of said two solid pieces being elastically pressed against one of the opposite sides of the ribbon.

As a consequence, all -notably both- of the ribbons -notably two of the ribbons- are independently and efficiently maintained longitudinally in compression by two opposite solid pieces. Each of the bent parties of all of the serpentine shaped air heating elements (ribbons) tightly cooperates with one recess of the plurality of recesses of a solid piece. Each of the bend parties of one side of one serpentine shaped air heating elements (ribbon) tightly cooperates with one recess of the plurality of recesses of a solid piece, so as the ribbons are efficiently maintained, and are not likely to move relatively to the solid pieces (insulators) under the effect of engine vibration and/or under the effect of the debit of air in the air heater. No preferential wear of one ribbon is observed and the risk of loss of heating efficiency is limited, if not avoided. The wear of the ribbons is in any case more evenly distributed.

Additionally, the holder for insulators according to the invention is designed to be able to accommodate a plurality of solid pieces (insulators) of insulating material, each solid piece (insulator) of the plurality of solid pieces (insulators) accommodated in the compartments of the holder being separated of the other solid piece(s) accommodated in the holder by at least one partition designed to extend between two solid pieces (insulators), each of said two solid pieces being independently from each other elastically pressed against one side of one ribbon of the plurality of ribbons. As a consequence, thermal expansion of one ribbon can occur independently of the thermal expansion of another ribbon, distinct of said one ribbon, both ribbons remaining efficiently maintained by the solid pieces (insulators) even the differential thermal expansion of the ribbons.

The holder according to the invention is adapted to accommodate at least two solid pieces of insulating material, each of the at least two solid pieces of insulating material being adapted to receive one serpentine shaped air heating element. Each of the solid pieces of insulating material accommodated in the holder presents a unique row of aligned recesses, each row of the plurality of recesses being adapted to cooperate with a bent party of a serpentine shaped heating element. The holder for insulators and the insulator holder of an electric air heater comprising said holder are adapted to accommodate solid pieces of insulating material, said solid pieces being not subject to differential stresses provided by the two adjacent ribbons and do not risk to break longitudinally into two parts. As a consequence, the holder for insulators and the insulator holder of an electric air heater according to the invention are suitable for all type air heater having serpentine shaped heating elements (ribbons) with any spacing.

Additionally, the holder for insulators according to the invention is designed to be able to accommodate a plurality of solid pieces (insulators) of insulating material, each solid piece being submitted to vibrations from a single ribbon. These vibrations are neither transmitted to nor received by adjacent solid pieces. Hence, the mechanical resistance of the solid pieces (insulators) to vibrations is increased.

Additionally, the holder for insulators according to the invention is designed to be able to accommodate a plurality of solid pieces (insulators) of insulating material, each solid piece being separated from each other by at least one partition designed to extend between two insulators. Said at least one partition is positioned between two compartments accommodating each one solid piece. Thus, friction between solid pieces of insulating material placed in adjacent compartments of the holder is avoided.

The air heater to be placed in an engine compartment of a diesel machine, said air heater comprising at least one insulator holder according to the invention is adapted to withstand both thermal and mechanical stresses experienced by the heating during its life time. Air heater is therefore of increased durability and robustness. This increased durability and robustness is ensured with little number of components.

In some preferred embodiments, advantageously and according to the invention, the solid pieces are chosen, independently of each other, in the group formed of electric insulators, of thermic insulators -notably solid state high temperature insulators-, and of electric and thermic insulators. Advantageously, at least one solid piece is made of a material chosen in the group of glass and ceramics. In some preferred embodiments, the insulating material is a ceramic.

In some preferred embodiments, at least one partition of the holder for insulators is formed by a plurality of tongues. In some preferred embodiments, at least one partition comprises at least one hook adapted to maintain one solid piece in a compartment of the holder and to secure one -that is to say a unique- solid piece in said compartment. In this preferred embodiment, at least one hook is a folded cut portion of the bottom of the holder. One first partially cut out the shape of every hook in the bottom part of the holder and then one folds the partially cut out hook by any means known to those skilled in the art. In this preferred embodiment, at least one hook -notably all hooks- present(s) a ledge extending from a free end of the hook(s) in direction of one lateral wall and adapted for securing the solid piece in the compartment delimited by said lateral wall and said at least one hook. The ledge secures the solid piece in a fastened position in the compartment. Thus, the insulator is easily mounted on the heating envelope.

In one particular embodiment, the holder comprises a row of aligned hooks wherein at least one first hook of the row of hooks presents a ledge extending in the direction of a first lateral wall of the holder and at least one second hook of the row of hooks, distinct of said at least one first hook, presents a ledge extending in the direction of a second lateral wall of the holder. In this particular embodiment, said at least one first hook and the first lateral wall define, with the bottom of the holder, a compartment for accommodating one first solid piece of insulating material, and said at least one second hook and the second lateral wall define, with the bottom of the holder, a compartment for accommodating one second solid piece of insulating material.

In one particular embodiment, two adjacent hooks of the row of hooks present ledges extending in opposite directions. In this particular embodiment, the ledges of the hooks of the plurality of hooks extend longitudinally alternatively in direction of the first lateral wall and in direction of the second lateral wall.

In one preferred embodiment, the holder according to the invention is made of one (unique) metallic piece. In this preferred embodiment, the holder according to the invention is made of one cut and folded metal piece. The holder according to the invention made of one (unique) metallic piece is ready for use and for receiving a plurality of solid pieces.

In some preferred embodiments, at least one -notably both-lateral wall(s) of the holder presents a flange extending at a free end of said lateral wall in direction of the opposite lateral wall. The flange enables, in combination with the ledges of hooks, to fasten securely the solid piece in a compartment. In these preferred embodiments, at least one flange is a folded free end of said lateral wall.

In some preferred embodiments, the bottom of the holder presents at least one -notably two- hole(s) for fixing the holder accommodating the plurality of solid pieces to the inner face of a housing of the air heater. The shape of holes is chosen to be able to cooperate with a rivet or with a screw and affix the insulator holder to the housing.

In some preferred embodiments, the bottom comprises abutments extending at the longitudinal ends of the holder, said abutments being formed by folding cut portions of the bottom. The abutments are destined to secure longitudinally the solid pieces in the compartments.

The invention extends to an insulator holder comprising a holder for insulators according to the invention.

The invention extends to an insulator holder comprising a holder according to the invention and at least two solid pieces (insulators) of an insulating material, each one of the at least two solid pieces being accommodated and secured in one compartment of the holder, and wherein:
- each of the solid pieces being provided with a plurality of aligned recesses, each recess of the plurality of aligned recesses being disposed to be able to cooperate with one bent portion of a plurality of bent portions of one serpentine shaped air heating element (ribbon), said plurality of bent portions extending on one side of the serpentine shaped air heating element, and
- said at least two solid pieces of the insulator holder being adapted to maintain at least two serpentine shaped air heating elements in a debit of air flowing through an air heater and to keep said at least two serpentine shaped air heating elements separate and isolated from each other.

In certain preferred embodiments according to the invention, the bottom of the holder presents at least one -notably at least one circle shaped- hole accessible for affixing the insulator holder to a housing of an air heater.

In certain preferred embodiments according to the invention, the insulator holder comprises at least one leaf spring extending between the bottom of the holder and a main face of one solid piece accommodated in a compartment of the holder and urging said solid piece away from the bottom and toward the flange of each lateral wall and toward the ledge of at least one hook of the partition. In certain preferred embodiment, the pretension force applied to each of the solid piece is able to be adjusted during assembly of the insulator holder by adjustment of the corresponding leaf spring.

In certain preferred embodiments according to the invention, at least one lateral wall of the holder present a half-moon shaped hole, said half-moon shaped hole being destined to receive a solid cylinder with a complementary half-moon shaped transversal section. The longitudinal concave face of the solid cylinder is adapted to take support on the solid piece without hitting the solid piece, whereas the longitudinal convex face of the solid cylinder enables one to bend the abutment, so that the solid pieces is secured longitudinally in the compartment. During assembly of the insulator holder, one inserts the solid cylinder into the holder through the half-moon shaped holes after the leaf springs and solid pieces (insulators) are disposed in the holder, then bend the cut portion (corresponding to the formation of abutment) of the bottom of the holder, said cut portion wrapping the solid cylinder, to form the abutment. Ease of assembly is ensured.

In certain preferred embodiments according to the invention, each solid piece (insulator) is held by abutments extending at longitudinal ends of the holder. In certain preferred embodiments according to the invention, at least one -notably all- of said abutment(s) are formed by folding cut portions of the bottom of the holder.

In preferred embodiments according to the invention, each solid piece is provided with one set (row) of aligned recesses, each of said aligned recess being adapted to be able to accommodate and cooperate with one bent party of one serpentine shaped air heating element of an air heater.

The invention extends to an air heater comprising an insulator holder according to the invention.

The invention extends to an air heater to be placed in an engine compartment of a vehicle, said air heater comprising:
- a housing delimiting a passage adapted to be traversed by an air flow,
- at least two serpentine shaped air heating elements disposed in the passage of the housing, each one of at least two heating elements presenting bent parties forming two lateral opposite sides of said serpentine shaped air heating element;
characterized in that it comprises at least two insulator holders according to the invention, each of the two insulator holders cooperating with one lateral side of at least two serpentine shaped air heating elements of the air heater and being mounted opposite to each other in the housing.

The housing of the air heater according to the invention is designed to be able to receive a debit of air to be heated and to deliver a debit of heated air from the debit of air to be heated.

In preferred embodiments according to the invention, at least one -notably both- insulator holder(s) is fixed to the housing of the air heater with rivet or screws cooperating with the holes of at least one holder to fix the holder to the housing. This ensure robustness of the air heater with few components. The holder is mounted in solidarity with the housing by means of rivet(s) or screw(s), enabling a positioning of the holder and of the insulator holder in the right place during the assembly.

The invention extends to a vehicle comprising at least one air heater according to the invention. At least one air heater according to the invention can be mounted in the engine compartment of a diesel machine. At least one air heater can be part of a manifold assembly. At least one air heater can be incorporated (sandwiched) in the manifold assembly. However, at least one air heater can be integrated into a pre-existing manifold. The air heater comprising a holder according to the invention makes an easy to manufacture and robust against vibrations solution for air heaters.

The invention further relates to a holder for insulators, to an insulator holder comprising such a holder for insulators, to an air heater comprising at least one such insulator holder and to a vehicle equipped with such an air heater that are characterised, in combination or separately, by all or some of the features specified above or hereafter. Irrespective of the formal presentation that is provided, unless explicitly stated otherwise, the various features specified above or hereafter must not be considered to be closely or inextricably linked to each other, the invention can relate to only one of these structural or functional features, or to only some of these structural or functional features, or to only part of one of these structural or functional features, or even to any group, combination or juxtaposition of all or some of these structural or functional features.

Further aims, features and advantages of the invention will become apparent upon reading the following description, which is provided by way of a non-limiting example of some of its possible embodiments, and with reference to the accompanying drawings, in which:
- figure 1 is a perspective view of a holder for insulators according to one embodiment of the invention;
- figure 2 is a perspective view of an insulator holder comprising a holder for insulators according to the first embodiment of the invention;
- figure 3 is an exploded view of an insulator holder according to the first embodiment of the invention as represented in figure 2;
- figure 4 is a sectional view of an insulator holder according to the sectional longitudinal plan "P" of the first embodiment of the invention as represented in figure 2;
- figure 5 is a perspective view with a longitudinal section of an insulator holder according to the first embodiment of the invention;
- figure 6 is a sectional view of an insulator holder according to a second embodiment of the invention;
- figure 7 is a perspective view of an insulator holder according to a third embodiment of the invention;
- figure 8 is a perspective view of an air heater according to the invention, and;
- figure 9 is a sectional view of an air heater according to the invention.

The aim of the invention is to provide with a cheap and robust solution of an air heater. A robust air heater must withstand harsh vibrations profile, particularly the fixation of the serpentine shaped heating elements to the housing of the air heater. The holder must be firmly mounted in the housing. There was no air leakage allowed. A cheap air heater should use cheap components and in minimum quantity.

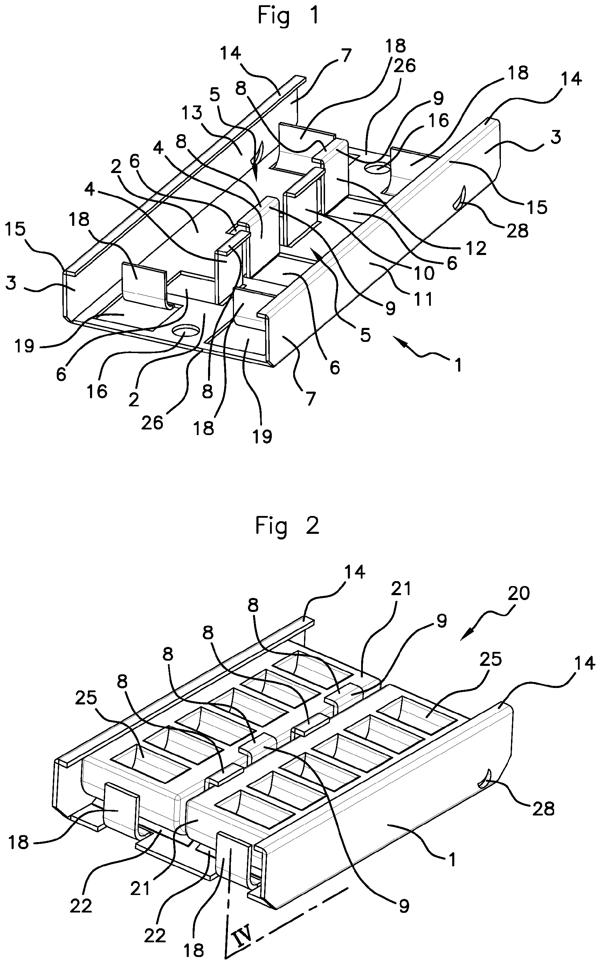

The holder 1 for insulators represented in figure 1 is formed in a metallic material. The holder 1 can be made from a metal sheet. It can be made in aluminium. Nothing prevents, however, the holder 1 from being formed of a polymer material, as long as the polymer material withstands high temperatures. The holder is made of one (a unique) piece, notably of one (a unique) metal piece 7. As such, the holder is monolithic. The holder 1 presents a bottom 2 rectangular in shape, and two lateral walls 3 extending longitudinally from opposite sides of the bottom 2 so as to define a U-shape transversal section of the holder 1. Each lateral wall 3 of the holder 1 forms a flange 14 extending in a plane orthogonal to the plane of the lateral walls 3. Each flange 14 of the holder 1 extends the entire length of the lateral wall 3. Nothing prevents however the flange 14 to extend discontinuously from the free end 15 of the lateral wall 3. Flanges 14 are adapted to cooperate with the bottom 2, the lateral walls 3, the hooks 4 and the abutments 18 for fastening a solid piece 21 of insulating material in the compartment 5 of the holder 1. Each hook 4 is provided with a ledge 8 extending from the free end 9 of the hook 4. A first lateral wall 11 with a flange 14 directed to the partition 4 cooperate with at least one first hook(s) 10 with ledge 8 directed to said first wall 11 and forming a compartment 5 of the holder 1 wherein an insulator 21 can be fastened. A second lateral wall 13 with a flange 14 directed to the central partition 4 cooperate with at least one second hook(s) 12 with ledge 8 directed to said second lateral wall 13 and forming another compartment 5 of the holder 1 wherein another insulator 21 can be fastened. Both compartments are secured with abutments 18 extending at both longitudinal ends of the holder 1.

In the embodiment represented figure 1, hooks 4 and abutments 18 are formed by partial cutting of portions of the bottom 2 and folding of the partially cut portions to form hook 4, ledge 8 and abutments 18. The partially cut and fold portions of the bottom 2 forming hooks 4 leave a vacancy 6, and the partially cut and fold portions of the bottom 2 forming abutments 18 leave a vacancy 19. Each of the two lateral walls 3 of the holder 1 represented in figure 1 present a half-moon shaped hole for receiving a transversal solid cylinder (not represented in figure 1). The bottom 2 of the holder 1 represented in figure 1 presents two circle-shaped holes 16 located at both longitudinal ends 26 of the holder 1, said circle-shaped holes 16 being adapted to cooperate with screws or rivets for solidarize the holder 1 and the housing of an air heater. The holder 1 for insulators according to the invention provides with a cheap and robust solution for an air heater.

The insulator holder 20 represented in figure 2 comprises a holder 1 for insulators, two leaf springs 22 and two solid pieces 21 of insulator material (insulators), each insulator being secured in one compartment 5 of the holder 1. The two insulators 21 are each provided with a unique row of aligned recesses 25. The unique row of aligned recesses 25 is adapted for being able to cooperate with bent parties of a serpentine shaped heating element, and maintain said serpentine shaped heating element in the housing of an air heater. Each compartment 5 of the holder 1 tightly accommodates a unique insulator 21 comprising a row of aligned recesses 25. Each insulator 21 is maintained in the compartment 5 longitudinally by the abutments 18, laterally by one of the lateral walls 3 of the holder and by the hooks 4, and in the direction orthogonal to the bottom 2, by the flange 14 of said lateral wall 3 and by the ledge 8 extending at the free end 9 of the hooks 4, said ledge 8 extending in the direction of said lateral wall 3. Hooks 4 are positioned between the two compartments 5. Thus, friction between insulators 21 placed in the different compartments 5 is avoided. Hooks 4 are formed by folding/bending cut portions of the bottom 2 of the holder 1.

The insulator holder 20 represented in figure 2 also comprises one leaf spring 22 placed between the bottom 2 of the holder 1 and one insulator 21 placed in the compartment 5 of the holder 1. The leaf spring 22 urges the insulator 21 away from the bottom 2 and toward flange 14 and ledge 8.

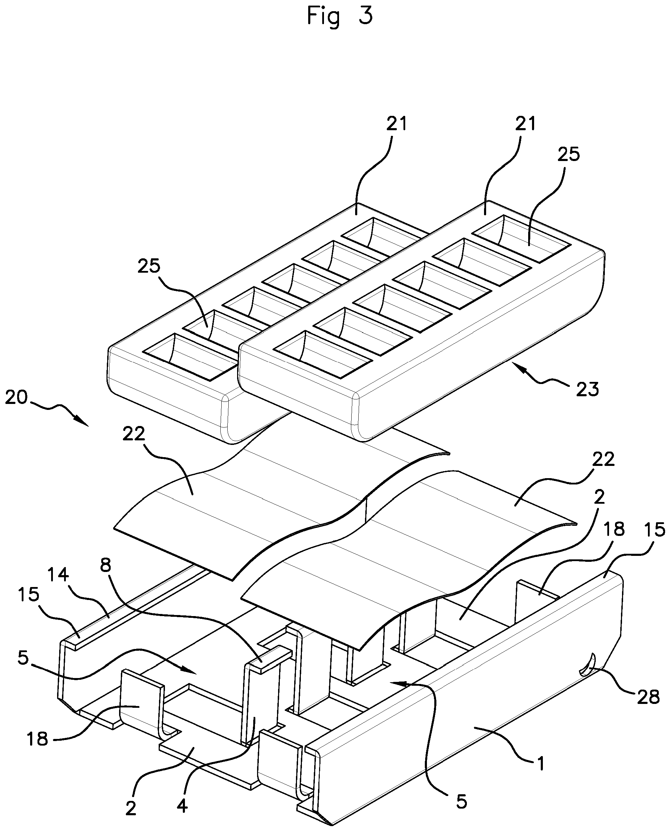

The exploded view of the insulator holder 20 represented in figure 3 comprises two leaf springs 22, each of the leaf springs being placed between the bottom 2 of the holder 1 and the main face 23 of the insulator 21, opposite to the recessed face of the insulator 21.

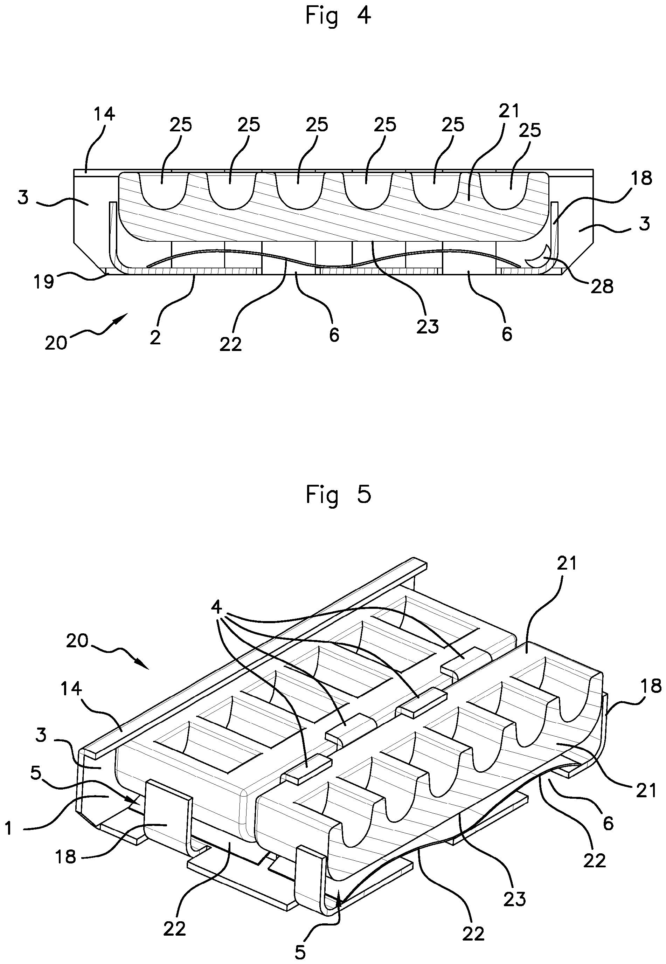

A longitudinal sectional view of an insulator holder 20 is presented in figure 4. The insulator holder 20 comprises a solid piece 21 of insulating material (insulator) presenting a set of aligned recesses 25. The insulator 21 is tightly maintained in the compartment 5 longitudinally by the abutments 18 and laterally by one lateral wall 3 and by the hooks 4 forming the partition of the holder 1. The insulator 21 is also tightly maintained in the direction orthogonal to the bottom 2 of the holder 1 on one side by the bottom 2 itself and by the flange 14 of the lateral wall 3 and by the ledges 8 of the hooks 4 on the other side. The insulator 21 is urged elastically against said flange 14 and said ledges 8 by a leaf spring 22 extending between the bottom 2 and the main face 23 of the insulator 21. As can be seen in figure 4, the lateral wall 3 of the holder 1 presents a half-moon shaped hole 28 adapted to accommodate a solid cylinder 29 presenting in transverse section a half-moon shape complementary of the shape of the half-moon shaped hole 28. The solid cylinder 29 is adapted to be introduced into the compartment 5 during assembly of the insulator holder 20 to enable one to bend the cut portion (corresponding to the folding of abutment 18) of the bottom of the holder and forming the abutment 18. The leaf spring 22 extends between the bottom 2 and the insulator 21, the insulator 21 being elastically pushed against the flange 14 and the ledges 8 by the leaf spring 22. A sectional view of a perspective view of an insulator holder 20 is presented in figure 5. The insulator holder 20 presents a partition formed of hooks 4 delimiting a first compartment 5 of the holder 1 and a second compartment 5 of the holder 1.

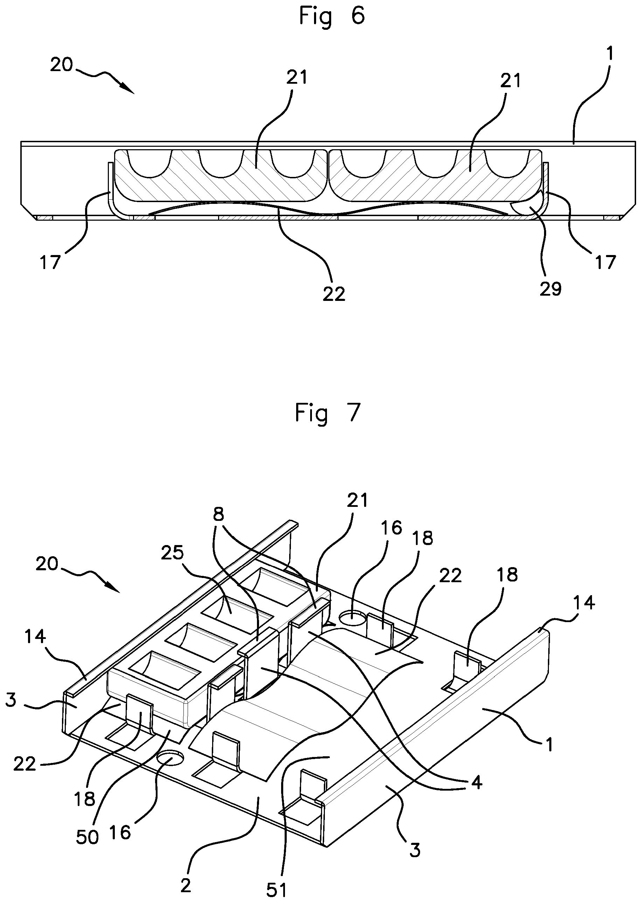

A longitudinal sectional view of a particular embodiment of an insulator holder 20 is presented in figure 6. The insulator holder 20 comprises two solid pieces 21 of insulating material (insulator) extending longitudinally so as to form a unique set of aligned recesses 25. The insulators 21 are tightly maintained in the compartment 5 longitudinally by the abutments 18 and laterally by one lateral wall 3 and by the hooks 4 forming the partition of the holder 1. The insulators 21 are also tightly maintained in the direction orthogonal to the bottom 2 of the holder 1 by the bottom 2 itself cooperating with a leaf spring 22 on one side and by the flange 14 of the lateral wall 3 and by the ledges 8 of the hooks 4 on the opposite side. The insulators 21 are urged elastically against said flange 14 and said ledges 8 by the leaf spring 22 extending between the bottom 2 and the main faces 23 of the insulators 21. As can be seen in figure 6, the lateral wall 3 of the holder 1 presents a half-moon shaped hole 28 adapted to accommodate a solid cylinder 29 presenting in transverse section a half-moon shape complementary of the shape of the half-moon shaped hole 28.

A particular embodiment of an insulator holder 20 according to the invention is presented figure 7 during its assembly. The holder 1 of the insulator holder 20 of figure 7 presents a plurality of aligned hooks 4 forming a partition. The compartment 50 formed by the plurality of aligned hooks 4 and the lateral wall 3 accommodate the solid piece 21 of insulating material. The second compartment 51 is provided with a leaf spring 22 only.

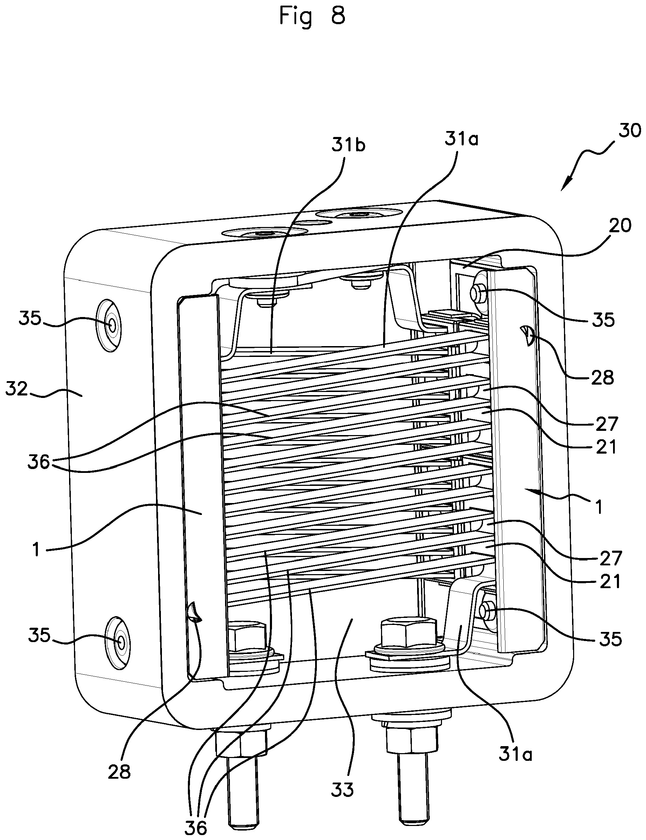

The air heater 30 represented in figure 8 comprises a housing 32 delimiting a passage 33 for a debit of air to be heated. Two serpentine shaped heating elements 31a,31b in the form of resistive ribbons are disposed transversally in the passage 33 for the debit of air. Said serpentine shaped heating elements 31a,31b present a plurality of linear segments 36 separated from each other with a bent party 27. The air heater 30 comprises two insulator holders 20 secured to opposite inner faces of the housing 32. The insulator holders 20 are secured to the housing by means of screws 35. Each one of the insulator holders 20 comprises a holder 1 for insulators and at least two solid pieces 21 of an insulating material. Said at least two solid pieces 21 (insulators) present aligned recesses, each of the aligned recesses being adapted to receive and accommodate a bent party 27 of one serpentine shaped heating element 31.

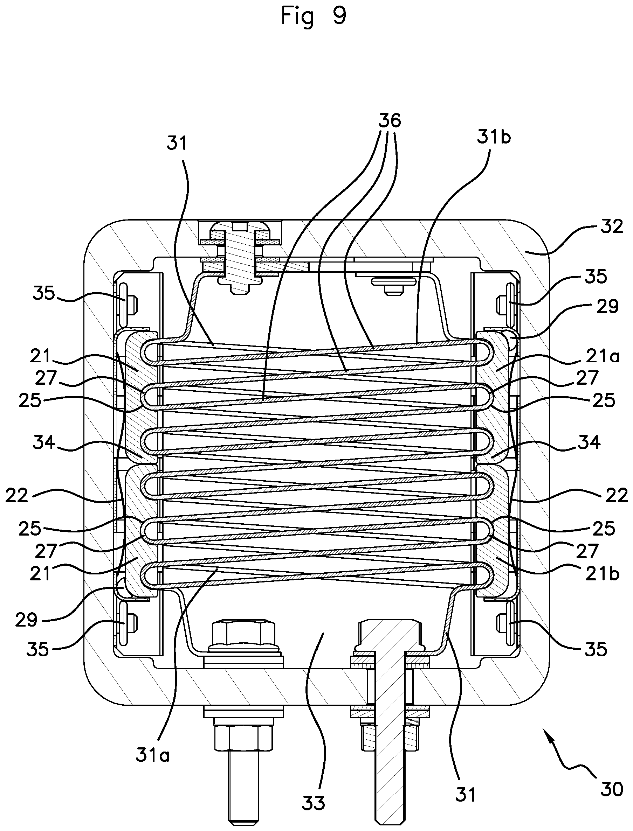

The air heater 30 represented in sectional view in figure 9 comprises a housing 32 delimiting a passage 33 for a debit of air to be heated. Two serpentine shaped heating elements 31a,31b in the form of resistive ribbons are disposed transversally in the passage 33 for the debit of air. The air heater 30 comprises two insulator holders 20 secured to opposite inner faces of the housing 32. The insulator holders 20 are secured to the housing by means of screws 35. Each one of the insulator holders 20 comprises a holder 1 for insulators and at least two of an insulating material. Said at least two solid pieces 21 (insulators) present solid pieces 21a,21b aligned recesses 25, each of the aligned recesses 25 being adapted to receive and accommodate a bent party 27 of one serpentine shaped heating element 31. Each one of the insulator holders 20 comprises a leaf spring 22 adapted to urge elastically the solid pieces 21a,21b away from the bottom of the holder 1 and to place the recesses 25 of the solid pieces 21a,21b in close and tight contact with the bent parties 27 of the serpentine shaped heating element 31. Thus, the serpentine shaped heating element 31 is perfectly elastically maintained by the solid pieces 21a,21b and is highly resistant to vibrations.

The invention can be the subject of numerous variations and applications other than those described above. In particular, it is obvious that, unless otherwise specified, the various structural and functional features of each of the aforementioned embodiments must not be considered to be combined and/or closely and/or inextricably linked to one another, but, on the contrary, must be considered to be simple juxtapositions. Furthermore, the structural and/or functional features of the various embodiments described above can be the subject, in whole or in part, of any different juxtaposition or of any different combination.

## Claims

1. - Holder (1) for accommodating at least two solid pieces (21) of at least one insulating material, said at least two solid pieces (21) being adapted for maintaining serpentine shaped air heating elements (31) of an air heater (30), in a debit of air flowing through the air heater (30) and for maintaining said serpentine shaped air heating elements (31) at distance from each other in the air heater (30);
said holder (1) presenting a bottom (2) and two lateral walls (3) extending from longitudinal sides of the bottom (2) in two planes parallel to each other and orthogonal to the plane of the bottom (2), and defining a U-shaped transversal section of the holder (1),
**characterized in that** said holder (1) is made of one unique piece and presents at least one partition extending between the lateral walls, from the bottom (2) in a plane parallel to the planes of the lateral walls (3) and delimiting with the bottom (2) and the lateral walls (3), at least two compartments (5) of the holder (1), each compartment (5) being designed to accommodate and secure one of said solid pieces (21) of insulating material.

2. - Holder (1) according to claim 1, **characterized in that** at least one partition comprises at least one hook (4) adapted to maintain one solid piece (21) in a compartment (5) of the holder (1) and to secure one solid pieces (21) in said compartment (5).

3. - Holder (1) according to claim 2, **characterized in that** at least one hook (4) is a folded cut portion (6) of the bottom (2) of the holder (1).

4. - Holder (1) according to one of the claims 2 or 3, **characterized in that** at least one hook (4) present a ledge (8) extending from a free end (9) of the hook (4) in direction of one lateral wall (3) and adapted for securing the solid piece (21) in the compartment (5) delimited by said lateral wall (3) and said at least one hook (4).

5. - Holder (1) according to one of claims 2 to 4, **characterized in that** it comprise a row of aligned hooks (4) wherein at least one first hook (10) of the row of hooks (4) presents a ledge (8) extending in the direction of a first lateral wall (11) of the holder (1) and at least one second hook (12) of the row of hooks (4), distinct of said at least one first hook (10), presents a ledge (8) extending in the direction of a second lateral wall (13) of the holder (1).

6. - Holder (1) according to claim 5, **characterized in that** two adjacent hooks (4) of the row of hooks present ledges (8) extending in opposite directions.

7. - Holder (1) according to one of the claims 1 to 6, **characterized in that** it is formed in a unique metallic piece (7).

8. - Holder (1) according to one of claims 1 to 7, **characterized in that** at least one lateral wall(s) (11,13) of the holder (1) presents a flange (14) extending at a free end (15) of said lateral wall (11,13) in direction of the opposite lateral wall (13,11).

9. - Holder (1) according to claim 8, **characterized in that** at least one flange (14) is a folded free end (15) of said lateral wall (11,13).

10. - Holder (1) according to one of the claims 1 to 9, **characterized in that** the bottom (2) presents at least one hole (16) for fixing the holder (1) accommodating the plurality of solid pieces (21) to a housing (32) of the air heater (20).

11. - Insulator holder (20) comprising a holder (1) according to one of claims 1 to 10, and at least two solid pieces (21) of an insulating material, each one of the at least two solid pieces (21) being accommodated and secured in one compartment (5) of the holder (1), and wherein :
- each of the solid pieces (21) being provided with a plurality of aligned recesses (25), each recess (25) being disposed to be able to cooperate with one bent portion (27) of a plurality of bent portions (27) of one serpentine shaped air heating element, said plurality of bent portions (27) extending on one side of one serpentine shaped air heating element (31), and
- said at least two solid pieces (21) of the insulator holder (20) being adapted to maintain at least two serpentine shaped air heating elements (31) in a debit of air flowing through an air heater (30) and to keep said at least two serpentine shaped air heating elements (31) separate and isolated from each other.

12. - Insulator holder (20) according to claim 11, **characterized in that** it comprises at least one leaf spring (22) extending between the bottom (2) of the holder (1) and a main face (23) of one solid piece (21) accommodated in a compartment (5) of the holder (1) and urging said solid piece (21) away from the bottom (2) and toward the flange (14) of each lateral wall (3).

13. - Insulator holder (20) according to one of claims 11 or 12, **characterized in that** each insulator (21) is held by abutments (18) extending at longitudinal ends (26) of the holder (1).

14. - Air heater (30) to be placed in an engine compartment of a vehicle and comprising:
- a housing (32) delimiting a passage (33) adapted to be traversed by an air flow,
- at least two serpentine shaped air heating elements (31) disposed in the passage (33) of the housing (32), each one of at least two heating elements (31) presenting bent parties (27) forming two lateral opposite sides (34) of said serpentine shaped air heating element (31);
**characterized in that** it comprises two insulator holders (20) according to one of claims 11 to 13, each of the two insulator holders (20) cooperating with one lateral side (34) of at least one serpentine shaped air heating element (31) of the air heater (30) and being mounted opposite to each other in the housing (32).

15. - Vehicle **characterized in that** it comprises an air heater (30) according to claim 14.

## Patentansprüche

1. Halter (1) zur Aufnahme von mindestens zwei festen Teilen (21) mindestens eines Isoliermaterials, wobei die mindestens zwei festen Teile (21) ausgelegt sind, um serpentinenförmige Lufterhitzungselemente (31) eines Lufterhitzers (30) in einem Luftdurchsatz zu halten, der durch den Lufterhitzer (30) strömt, und um die serpentinenförmigen Lufterhitzungselemente (31) in einem Abstand voneinander im Lufterhitzer (30) zu halten,
wobei der Halter (1) einen Boden (2) und zwei seitliche Wände (3) darstellt, die sich von längs gerichteten Seiten des Bodens (2) in zwei Ebenen parallel zueinander und orthogonal zur Ebene des Bodens (2) erstrecken und einen U-förmigen Querabschnitt des Halters (1) definieren,
**dadurch gekennzeichnet, dass** der Halter (1) aus einem einzigen Teil hergestellt ist und mindestens eine Teilung darstellt, die sich zwischen den seitlichen Wänden vom Boden (2) in einer Ebene parallel zu den Ebenen der seitlichen Wände (3) erstreckt und an den Boden (2) und die seitlichen Wände (3) angrenzt, mindestens zwei Abteile (5) des Halters (1), wobei jedes Abteil (5) entworfen ist, um einen der festen Teile (21) von Isoliermaterial aufzunehmen und zu befestigen.

2. Halter (1) nach Anspruch 1, **dadurch gekennzeichnet, dass** mindestens eine Teilung mindestens einen Haken (4) umfasst, der ausgelegt ist, um einen festen Teil (21) in einem Abteil (5) des Halters (1) zu halten und einen festen Teil (21) in dem Abteil (5) zu befestigen.

3. Halter (1) nach Anspruch 2, **dadurch gekennzeichnet, dass** mindestens ein Haken (4) ein gefalteter geschnittener Abschnitt (6) des Bodens (2) des Halters (1) ist.

4. Halter (1) nach einem der Ansprüche 2 oder 3, **dadurch gekennzeichnet, dass** mindestens ein Haken (4) einen Absatz (8) aufweist, der sich von einem freien Ende (9) des Hakens (4) in Richtung einer seitlichen Wand (3) erstreckt und ausgelegt ist, um den festen Teil (21) im Abteil (5), begrenzt von der seitlichen Wand (3) und dem mindestens einen Haken (4), zu befestigen.

5. Halter (1) nach einem der Ansprüche 2 bis 4, **dadurch gekennzeichnet, dass** er eine Reihe von ausgefluchteten Haken (4) umfasst, wobei mindestens ein erster Haken (10) der Reihe von Haken (4) einen Absatz (8) darstellt, der sich in der Richtung einer ersten seitlichen Wand (11) des Halters (1) erstreckt, und mindestens ein zweiter Haken (12) der Reihe von Haken (4), verschieden von dem mindestens einen Haken (10), einen Absatz (8) darstellt, der sich in der Richtung einer zweiten seitlichen Wand (13) des Halters (1) erstreckt.

6. Halter (1) nach Anspruch 5, **dadurch gekennzeichnet, dass** zwei benachbarte Haken (4) der Reihe von Haken Absätze (8) darstellen, die sich in entgegengesetzte Richtungen erstrecken.

7. Halter (1) nach einem der Ansprüche 1 bis 6, **dadurch gekennzeichnet, dass** er aus einem einzigen Metallteil (7) gebildet ist.

8. Halter (1) nach einem der Ansprüche 1 bis 7, **dadurch gekennzeichnet, dass** mindestens (eine) seitliche Wand(Wände) (11, 13) des Halters (1) einen Flansch (14) aufweist, der sich an einem freien Ende (15) der seitlichen Wand (11, 13) in Richtung der gegenüberliegenden seitlichen Wand (13, 11) erstreckt.

9. Halter (1) nach Anspruch 8, **dadurch gekennzeichnet, dass** mindestens ein Flansch (14) ein gefaltetes freies Ende (15) der seitlichen Wand (11, 13) ist.

10. Halter (1) nach einem der Ansprüche 1 bis 9, **dadurch gekennzeichnet, dass** der Boden (2) mindestens ein Loch (16) aufweist, um den Halter (1), der die Vielzahl von festen Teilen (21) aufnimmt, an ein Gehäuse (32) des Lufterhitzers (20) zu befestigen.

11. Isolatorhalter (20), umfassend einen Halter (1) nach einem der Ansprüche 1 bis 10 und mindestens zwei feste Teile (21) eines isolierenden Materials, wobei jeder der mindestens zwei festen Teile (21) in einem Abteil (5) des Halters (1) aufgenommen und befestigt ist, und wobei;
- jeder der festen Teile (21) mit einer Vielzahl von ausgefluchteten Aussparungen (25) ausgestattet ist, wobei jede Aussparung (25) angeordnet ist, um dazu in der Lage zu sein, mit einem gebogenen Abschnitt (27) einer Vielzahl von gebogenen Abschnitten (27) eines sperpentinenförmigen Heizelements zusammenzuarbeiten, wobei sich die Vielzahl von gebogenen Abschnitten (27) auf einer Seite eines sperpentinenförmigen Heizelements (31) erstreckt, und
- die mindestens zwei festen Teile (21) des Isolatorhalters (20) ausgelegt sind, um mindestens zwei serpentinenförmige Lufterhitzungselemente (31) in einem Luftdurchsatz zu halten, der durch einen Lufterhitzer (30) strömt, und die mindestens zwei serpentinenförmigen Lufterhitzungselemente (31) voneinander getrennt und isoliert zu halten.

12. Isolatorhalter (20) nach Anspruch 11, **dadurch gekennzeichnet, dass** er mindestens eine Blattfeder (22) umfasst, die sich zwischen dem Boden (2) des Halters (1) und einer Hauptfläche (23) eines festen Teils (21) erstreckt, die in einem Abteil (5) des Halters (1) aufgenommen ist und den festen Teil (21) weg vom Boden (2) und hin zum Flansch (14) jeder seitlichen Wand (3) zwingt.

13. Isolatorhalter (20) nach einem der Ansprüche 11 oder 12, **dadurch gekennzeichnet, dass** jeder Isolator (21) durch Widerlager (18) gehalten wird, die sich an länglichen Enden (26) des Halters (1) erstrecken.

14. Lufterhitzer (30), der in einem Maschinenabteil eines Fahrzeugs platziert werden soll und Folgendes umfasst:
- ein Gehäuse (32), das einen Durchgang (33) begrenzt, der ausgelegt ist, um von einem Luftfluss durchquert zu werden,
- mindestens zwei serpentinenförmige Lufterhitzungselemente (31), die im Durchgang (33) des Gehäuses (32) angeordnet sind, wobei jedes von mindestens zwei Erhitzungselementen (31) gebogene Teile (27) aufweiset, die zwei lateral gegenüberliegende Seiten (34) des sperpentinenförmigen Heizelements (31) bilden,
**dadurch gekennzeichnet, dass** er zwei Isolatorhalter (20) nach einem der Ansprüche 11 bis 13 umfasst, wobei jeder der zwei Isolatorhalter (20) mit einer lateralen Seite (34) mindestens eines serpentinenförmigen Lufterhitzungselements (31) des Lufterhitzers (30) zusammenarbeitet und sie einander gegenüberliegend im Gehäuse (32) angeordnet sind.

15. Fahrzeug, **dadurch gekennzeichnet, dass** es einen Lufterhitzer (30) nach Anspruch 14 umfasst.

## Revendications

1. Support (1) pour loger au moins deux pièces solides (21) d'au moins un matériau isolant, lesdites au moins deux pièces solides (21) étant adaptées pour maintenir des éléments de réchauffement d'air en forme de serpentin (31) d'un réchauffeur d'air (30), dans un débit d'air s'écoulant à travers le réchauffeur d'air (30) et pour maintenir lesdits éléments de réchauffement d'air en forme de serpentin (31) à une distance les uns des autres dans le réchauffeur d'air (30) ;
ledit support (1) présentant un fond (2) et deux parois latérales (3) s'étendant à partir des côtés longitudinaux du fond (2) dans deux plans parallèles entre eux et orthogonaux au plan du fond (2), et définissant une section transversale en forme de U du support (1),
**caractérisé en ce que** ledit support (1) est réalisé avec une pièce unique et présente au moins une séparation s'étendant entre les parois latérales, depuis le fond (2) dans un plan parallèle aux plans des parois latérales (3) et délimitant avec le fond (2) et les parois latérales (3), au moins deux compartiments (5) du support (1), chaque compartiment (5) étant conçu pour loger et fixer l'une desdites pièces solides (21) de matériau isolant.

2. Support (1) selon la revendication 1, **caractérisé en ce qu'**au moins une séparation comprend au moins un crochet (4) adapté pour maintenir une pièce solide (21) dans un compartiment (5) du support (1) et pour fixer l'une des pièces solides (21) dans ledit compartiment (5).

3. Support (1) selon la revendication 2, **caractérisé en ce qu'**au moins un crochet (4) est une partie coupée pliée (6) du fond (2) du support (1).

4. Support (1) selon l'une des revendications 2 ou 3, **caractérisé en ce qu'**au moins un crochet (4) présente un rebord (8) s'étendant à partir d'une extrémité libre (9) du crochet (4) en direction d'une paroi latérale (3) et adapté pour fixer la pièce solide (21) dans le compartiment (5) délimité par ladite paroi latérale (3) et ledit au moins un crochet (4).

5. Support (1) selon l'une des revendications 2 à 4, **caractérisé en ce qu'**il comprend une rangée de crochets (4) alignés, dans lequel au moins un premier crochet (10) de la rangée de crochets (4) présente un rebord (8) s'étendant dans la direction d'une première paroi latérale (11) du support (1) et au moins un second crochet (12) de la rangée de crochets (4), distinct dudit au moins un premier crochet (10), présente un rebord (8) s'étendant dans la direction d'une seconde paroi latérale (13) du support (1).

6. Support (1) selon la revendication 5, **caractérisé en ce que** deux crochets (4) adjacents de la rangée de crochets présentent des rebords (8) s'étendant dans des directions opposées.

7. Support (1) selon l'une des revendications 1 à 6, **caractérisé en ce qu'**il est formé dans une pièce métallique (7) unique.

8. Support (1) selon l'une des revendications 1 à 7, **caractérisé en ce qu'**au moins une (des) paroi(s) latérale(s) (11, 13) du support (1) présent(ent) une bride (14) s'étendant au niveau d'une extrémité libre (15) de ladite paroi latérale (11, 13) dans la direction de la paroi latérale (13, 11) opposée.

9. Support (1) selon la revendication 8, **caractérisé en ce qu'**au moins une bride (14) est une extrémité libre (15) pliée de ladite paroi latérale (11, 13).

10. Support (1) selon l'une des revendications 1 à 9, **caractérisé en ce que** le fond (2) présente au moins un trou (16) pour fixer le support (1) logeant la pluralité de pièces solides (21) sur un boîtier (32) du réchauffeur d'air (20).

11. Support d'isolateur (20) comprenant un support (1) selon l'une des revendications 1 à 10, et au moins deux pièces solides (21) d'un matériau isolant, chacune des au moins deux pièces solides (21) étant logée et fixée dans un compartiment (5) du support (1), et dans lequel :
chacune des pièces solides (21) étant prévue avec une pluralité d'évidements (25) alignés, chaque évidement (25) étant disposé pour pouvoir coopérer avec une partie courbée (27) d'une pluralité de parties courbées (27) d'un élément de réchauffement d'air en forme de serpentin, ladite pluralité de parties courbées (27) s'étendant d'un côté d'un élément de réchauffement d'air en forme de serpentin (31), et
lesdites au moins deux pièces solides (21) du support d'isolateur (20) étant adaptées pour maintenir au moins deux éléments de réchauffement d'air en forme de serpentin (31) dans un débit d'air s'écoulant à travers un réchauffeur d'air (30) et pour maintenir lesdits au moins deux éléments de réchauffement d'air en forme de serpentin (31) séparés et isolés l'un de l'autre.

12. Support d'isolateur (20) selon la revendication 11, **caractérisé en ce qu'**il comprend au moins un ressort à lames (22) s'étendant entre le fond (2) et le support (1) et une face principale (23) d'une pièce solide (21) logée dans un compartiment (5) du support (1) et poussant ladite pièce solide (21) à l'opposé du fond (2) et vers la bride (14) de chaque paroi latérale (3).

13. Support d'isolateur (20) selon l'une des revendications 11 ou 12, **caractérisé en ce que** chaque isolateur (21) est maintenu par des butées (18) s'étendant au niveau des extrémités longitudinales (26) du support (1).

14. Réchauffeur d'air (30) destiné à être placé dans un compartiment de moteur d'un véhicule et comprenant :
un boîtier (32) délimitant un passage (33) adapté pour être traversé par un flux d'air,
au moins deux éléments de réchauffement d'air en forme de serpentin (31) disposés dans le passage (33) du boîtier (32), chacun des au moins deux éléments de réchauffement (31) présentant des parties courbées (27) formant deux côtés latéraux (34) opposés dudit élément de chauffage d'air en forme de serpentin (31) ;
**caractérisé en ce qu'**il comprend deux supports d'isolateur (20) selon l'une des revendications 11 à 13, chacun des deux supports d'isolateur (20) coopérant avec un côté latéral (34) d'au moins un élément de réchauffement d'air en forme de serpentin (31) du réchauffeur d'air (30) et étant monté à l'opposé de l'autre dans le boîtier (32).

15. Véhicule **caractérisé en ce qu'**il comprend un réchauffeur d'air (30) selon la revendication 14.
